# EUROPÄISCHE PATENTSCHRIFT

(11) **EP 2 635 781 B1**
(45) Veröffentlichungstag und Bekanntmachung des Hinweises auf die Patenterteilung: **27.02.2019**
(21) Anmeldenummer: 11776452.2
(22) Anmeldetag: 01.11.2011
(51) Int. Cl.: F02C 6/12, F01D 21/04

(54) **ABGASTURBOLADER MIT MITTEL ZUR AXIALEN SICHERUNG DER WELLE BEIM BERSTEN DES VERDICHTERRADES**
EXHAUST GAS TURBOCHARGER WITH MEANS FOR AXIALLY SECURING THE SHAFT IN THE EVENT OF A COMPRESSOR WHEEL BURST
TURBOCOMPRESSEUR À GAZ D'ÉCHAPPEMENT AVEC MOYENS PERMETTANT LA FIXATION AXIALE DE L'ARBRE EN CAS DE RUPTURE DE LA ROUE DE COMPRESSEUR

(30) Priorität: 01.11.2010 DE 102010043198
(43) Veröffentlichungstag der Anmeldung: 11.09.2013
(73) Patentinhaber: ABB Turbo Systems AG, 5400 Baden (CH)
(72) Erfinder: SCHLIENGER, Joel, 8008 Zürich (CH); LEBONG, Markus, 5443 Niederrohrdorf (CH); BAUDISCH, Olaf, 8400 Winterthur (CH); ABERLE, Patrick, 5417 Untersiggenthal (CH)
(74) Vertreter: Zimmermann & Partner Patentanwälte mbB
(86) Internationale Anmeldenummer: PCT/EP2011/069177
(87) Internationale Veröffentlichungsnummer: WO 2012/059481

(56) Entgegenhaltungen:
- EP-A1- 1 353 041
- GB-A- 2 377 731

## Beschreibung

### Technisches Gebiet

Die Erfindung bezieht sich auf das Gebiet der Abgasturbolader für aufgeladene Brennkraftmaschinen.

Sie betrifft einen Abgasturbolader mit einem Turbinenrad und einem Verdichterrad, welche über eine Welle miteinander verbunden sind, wobei zwischen dem Verdichterrad und dem Turbinenrad ein Mittel zur axialen Sicherung der Welle und des mit ihr verbundenen Turbinenrades im Falle des Berstens des Verdichterrades vorgesehen ist.

Sie betrifft ferner einen Fangring zur axialen Sicherung der Welle eines Abgasturboladers.

### Stand der Technik

Für die Leistungssteigerung einer Brennkraftmaschine (Verbrennungsmotor) werden heutzutage standardmässig Abgasturbolader mit einem der Brennkammer der Brennkraftmaschine Luft für den Verbrennungsvorgang zuführenden Verdichter und einer Abgasturbine im Abgastrakt der Brennkraftmaschine eingesetzt. Mit der Aufladung der Brennkraftmaschine wird die Luft- und Kraftstoffmenge in den Brennkammern (Zylindern) erhöht und daraus ein merklicher Leistungsanstieg für die Brennkraftmaschine gewonnen. Der dafür verwendete Abgasturbolader setzt sich standardmässig aus einem Rotor, bestehend aus einem Verdichterrad und einem Turbinenrad sowie der Wellenlagerung, den strömungsführenden Gehäuseteilen (Verdichtergehäuse, Turbinengehäuse) und dem Lagergehäuse zusammen.

Im Volllastbetrieb der Brennkraftmaschine werden am Abgasturbolader sehr hohe Umfangsgeschwindigkeiten an den Spitzendurchmessern der Turbinen- sowie der Verdichterräder erreicht. Die maximal zulässige Rotordrehzahl eines Abgasturboladers ist eine Funktion der Radgrösse, der Geometrie sowie der Festigkeitswerte der verwendeten Materialien. Generell unterliegen die rotierenden Komponenten sehr hohen Fliehkraftbelastungen und somit hohen Materialspannungen. Fehlstellen im Materialgefüge können unter Umständen zum Bersten des Verdichter- oder Turbinenrades führen, mit teils schwerwiegenden Folgen für die Gehäuseteile, welche die rotierenden Komponenten umgeben. Das Containmentkonzept eines Abgasturboladers ist grundsätzlich dahingehend auszulegen, dass sämtliche Bruchstücke innerhalb des Aussengehäuses zurückgehalten werden und die Umgebung des Laders nicht gefährden.

Im Falle einer Verdichterradhavarie durch ein auseinanderbrechendes Verdichterrad entfällt das bremsende Moment am Turboladerrotor, womit die nun frei antreibende Turbine auf Überdrehzahl beschleunigt und bei Erreichen der natürlichen Berstdrehzahl versagt. Beim natürlichen Bersten einer Radialturbine wird zwischen zwei Arten von Bersten unterschieden.

Beim Nabenbersten zerfällt der gesamte Nabenkörper inklusive der Turbinenschaufeln in mehrere Bruchstücke, wobei augenblicklich die gesamte Rotationsenergie der Turbine freigesetzt wird. Die mit grosser Wucht nach Aussen geschleuderten Bruchstücke beschädigen die umgebenden Gehäuseteile erheblich und können diese im schlimmsten Falle sogar durchschlagen und dadurch die Umgebung des Turboladers gefährden.

Andererseits kann die Turbine so ausgelegt werden, dass diese durch Schaufelbersten versagt. Dabei versagen die Turbinenschaufeln im Fussbereich zum Nabenkörper hin, während die Radnabe des Turbinenrades intakt bleibt, weiter rotiert und erst durch Reibung an den umgebenden Gehäuseteilen abgebremst wird. Da beim Schaufelbersten im ersten Moment lediglich die Turbinenschaufeln von der Radnabe gelöst sind, wird vorerst nur der kinetische Energieanteil der Schaufeln an die Umgebung abgegeben. Im Verlaufe des Auslaufens wird die restliche Rotationsenergie, d.h. der Anteil in der Nabe, durch die erwähnte Reibung an die Gehäuse abgegeben.

Beim Schaufelbersten einer Radialturbine bei deren natürlichen Berstdrehzahl besteht generell die Schwierigkeit, dass nach dem Schaufelabwurf eine Restenergie im nicht berstenden Nabenkörper verbleibt. Berstversuche haben gezeigt, dass die Welle beim Schaufelbersten bevorzugt zwischen den beiden Radiallagern im Bereich des Axiallagers versagt und auseinander bricht. In diesen Fällen ist der turbinenseitige Teil der Welle zusammen mit dem Nabenkörper des Turbinenrades durch das verdichterseitig der Bruchstelle angeordnete Axiallager in axiale Richtung nicht mehr ausreichend gesichert, und kann aus dem Turboladergehäuse in axialer Richtung austreten und in die Gasaustrittsleitung gelangen. Die Reibschweissverbindung zwischen der Welle und dem Turbinennabenkörper bleibt dabei intakt. Der verdichterseitige Teil der Welle bleibt hingegen in der verdichterseitigen Lagerstelle blockiert und folgt nicht dem Nabenkörper des Turbinenrades und dem daran befestigten Wellenstupf.

Ein frei rotierendes Bauteil in den Gasaustrittsleitungen der Turbine ist nicht erwünscht, da dieses unkontrollierbar ist und eine Schädigung der Abgasleitungen verursachen kann.

Aus der EP 1353 041 A1 ist ein Abgasturbolader bekannt, bei welchem auf der mit dem Turbinenrad verbundenen Welle ein Mittel zur axialen Sicherung der Welle und des mit ihr verbundenen Turbinenrades angeordnet ist. Das Sicherungsmittel verhindert im Falle des Berstens des Verdichterrades eine axiale Bewegung der Welle und des mit ihr verbundenen Turbinenrades in Richtung Turbine. Das Sicherungsmittel ist beispielsweise ein Sprengring, welcher in einer Nut in der Welle angeordnet ist, und im eingebauten Zustand zusammen mit Gehäuseteilen einen Axialanschlag für die Welle bildet. Die Montage und insbesondere die Demontage einer derart gesicherten Welle bei Wartungsarbeiten sind umständlich.

Aus GB 2 377 731 A ist eine Wellensicherungsvorrichtung einer Gasturbine bekannt, wobei die Wellensicherung an einer Fanwelle beschrieben ist. Die Fanwelle wird mit einem Stumpf bei der Montage durch ein im Betrieb rotierendes Gehäuseteil geschoben und durch den Verbund mit dem Fan und der Welle in Position gehalten. Durch die gewindeähnliche Verzahnung der Paarungskonturen ist ein axiales Durchschieben nur in einer bestimmten Winkellage möglich. Im normalen Betriebszustand sorgt ein axiales Spiel dafür, dass keinerlei Interaktion zwischen den Elementen stattfindet. Bei Bruch des Verbundes strebt die Welle nach aussen und wird dabei am Austreten über die Anschlagsschulter axial gesichert.

### Kurze Darstellung der Erfindung

Die Aufgabe der Erfindung besteht folglich darin, die Welle des Abgasturboladers mit einer Sicherungsvorrichtung zu versehen, welche im Falle eines Wellenbruchs das Austreten des turbinenseitigen Wellenstummels mit dem daran befestigten Nabenkörper des Turbinenrades verhindern kann, und mit welcher sich die Welle und das Turbinenrad auf einfache Weise montieren und demontieren lässt. Diese Aufgabe wird erfindungsgemäß mittels eines Abgasturboladers nach Anspruch 1 gelöst.

Der Abgasturbolader, welcher der vorliegenden Erfindung zugrunde liegt, umfasst eine Turbine mit einem Turbinenrad und einen Verdichter mit einem Verdichterrad. Das Turbinenrad und das Verdichterrad sind über eine Welle miteinander verbunden und in einem Lagergehäuse angeordnet. Die Welle ist um ihre Achse drehbar gelagert, wobei die Lager bevorzugterweise zwischen Turbinenrad und Verdichterrad angeordnet sind.

Zwischen dem Verdichterrad und dem Turbinenrad ist ein Mittel zur axialen Sicherung der Welle und des mit ihr verbundenen Turbinenrades vorgesehen, wobei dieses Mittel zur axialen Sicherung im Falle des Berstens des Verdichterrades eine axiale Bewegung der Welle und des mit ihr verbundenen Turbinenrades in Richtung der Turbine verhindert.

Erfindungsgemäss umfasst das Mittel zur axialen Sicherung der Welle und des mit ihr verbundenen Turbinenrades einerseits ein Gehäuseelement mit einer zentralen Öffnung sowie einen radial nach aussen ragenden Vorsprung (Radialvorsprung) auf der Welle. Das Gehäuseelement ist im Bereich der zentralen Öffnung in Umfangsrichtung mit einer Innenkontur versehen. Der Vorsprung auf der Welle ist in Umfangsrichtung mit einer Aussenkontur versehen. Die Innenkontur am Gehäuseelement und die Aussenkontur an der Welle sind aufeinander abgestimmt ausgestaltet, so dass sich beim Montieren der Welle und des mit ihr verbundenen Turbinenrades, der radial nach aussen ragende Vorsprung auf der Welle in wenigstens einer, bestimmten Winkelstellung der Welle zum Gehäuse, in axialer Richtung durch die zentrale Öffnung am Gehäuseelement schieben lässt, während der radial nach aussen ragende Vorsprung in jeder anderen als der wenigstens einen, bestimmten Winkelstellung der Welle zum Gehäuse, beim Verschieben in axialer Richtung an dem Gehäuseelement mit der zentralen Öffnung ansteht.

Die erfindungsgemäss als Kontur und Gegenkontur ausgestalteten Teile der Welle und des Lagergehäuses ermöglichen, dass die Welle im nicht rotierenden Zustand auf einfache Weise in das Lagergehäuse eingesetzt oder aus dem Lagergehäuse ausgebaut werden kann. Dabei wird die Welle mit dem Radialvorsprung in der bestimmten Winkelstellung, in welcher die Aussenkontur am Radialvorsprung mit der Innenkontur am Gehäuseelement übereinstimmt, axial verschoben.

Dagegen ist die Welle im Betrieb mit hohen Drehzahlen oder im Berstfall aufgrund der nur extrem kurzzeitig übereinstimmenden Winkelstellung zwischen der Innenkontur und der Aussenkontur ohne erheblichen Materialabtrag in axialer Richtung nicht verschiebbar. Aufgrund der hohen Umfangsgeschwindigkeit der rotierenden Aussenkontur der Welle und der in axialer Richtung betrachtet kaum bewegten Welle ist eine Durchdringung der Aussenkontur durch die Innenkonturen des axialen Sicherungsmittels ohne Materialabtrag nicht möglich. Die axiale Verschiebungsgeschwindigkeit der Welle müsste dabei um ein Vielfaches höher sein als deren Umfangsgeschwindigkeit um eine Durchdringung zu ermöglichen. So lässt sich dank dem gezielten axialen Arretieren der Welle und des mit ihr verbundenen Turbinenrades der Rotor innerhalb der Turboladerummantelung durch kontrolliertes Auslaufen sichern, wodurch die verbleibende Berstenergie langsam abgebaut werden kann und die Gasaustrittsleitung nicht belastet wird.

In einer Ausführungsform sind die Innenkontur und die Aussenkontur je in eine Anzahl sich wiederholender Kontursegmente unterteilt, so dass sich der radial nach aussen ragende Vorsprung in einer der Anzahl sich wiederholender Segmente entsprechenden Anzahl Winkelstellungen der Welle zum Gehäuse in axialer Richtung durch das radial bis an die Welle reichende Gehäuseelement schieben lässt, und der radial nach aussen ragende Vorsprung in jeder anderen Winkelstellung der Welle zum Gehäuse in axialer Richtung durch das radial bis an die Welle reichende Gehäuseelement blockiert ist.

Diese symmetrische Ausführungsform ermöglicht ein erleichtertes Montieren und Demontieren, da sich die Welle in mehreren Winkelstellungen zum Gehäuse in axialer Richtung ein- und ausbauen lässt.

Innenkontur und Aussenkontur können je mindestens eine Nocke und je mindestens eine Nut umfassen, wobei Nocke und Nut so definiert sind, dass in der Innenkontur des Gehäuseelements eine Nocke einen Abschnitt bezeichnet, welcher einen kleineren Innenradius aufweist als ein als Nut bezeichneter Abschnitt, und in der Aussenkontur am Radialvorsprung der Welle eine Nocke einen Abschnitt bezeichnet, welcher einen grösseren Aussenradius aufweist als ein als Nut bezeichneter Abschnitt. Unter diese Ausführungsform fällt etwa die Ausbildung der Sicherungsmittel als ein Aussenzahnrad und ein Innenzahnrad, mit einer übereinstimmenden Anzahl ineinandergreifender Zähne, wobei jeweils zwischen zwei Zähnen eine Lücke (Nut) ausgebildet ist.

Die Nocken auf dem Radialvorsprung der Welle werden vorteilhafterweise etwas grösser ausgeführt, als die Nocken am Gehäuseteil, da im Berstfall erheblich Material abgetragen werden kann. Das Risiko eines frühzeitigen Versagens der axialen Sicherung kann optional reduziert werden, indem das Nockenvolumen der Welle zum Nockenvolumen des Gehäuseelements im Verhältnis von 2:1, oder gar 3:1 festgelegt wird.

Das Gehäuseelement weist optional auf wenigstens einer axialen Stirnseite als Axialanschlag dienende Flächen auf, welche zumindest teilweise mit einer Fase versehen sind. Die Fase dient als Anlaufschräge und reduziert im Berstfall die Materialbelastungen an den Kanten der aufeinander treffenden Innenkontur und der Aussenkontur.

Das Gehäuseelement, welches Teil der Mittel zur axialen Sicherung der Welle und des mit ihr verbundenen Turbinenrades ist, kann optional als ein separates Gehäuseeinsatzstück ausgebildet sein, welches in axialer Richtung in das Lagergehäuse einbringbar ist. Beispielsweise kann das Gehäuseeinsatzstück ringförmig, als Fangring, ausgebildet sein, welcher axial und radial am Lagergehäuse aufliegt und somit genau positioniert und bezüglich der Welle zentriert ist.

Mit diesem Konzept lassen sich zusätzliche, axiale Wellensicherungen vermeiden (z.B. Sicherheitsringe), was die Demontage und Montage der Welle erheblich vereinfacht. Weitere Vorteile ergeben sich aus den abhängigen Ansprüchen.

### Kurze Beschreibung der Zeichnungen

Folgend sind anhand der Zeichnungen zwei Ausführungsformen des erfindungsgemässen Berstkonzepts für einen Abgasturbolader beschrieben. Gleichwirkende Elemente sind in den verschiedenen Figuren mit den gleichen Bezugszeichen versehen. Hierbei zeigt
- Fig. 1: einen schematischen Längsschnitt durch einen Abgasturbolader gemäss dem Stand der Technik, mit einer in einem Gehäuse rotierbar gelagerten Welle und einem mit ihr verbundenen Turbinenrad, sowie mit einem auf der Welle aufgesetzten Verdichterrad,
- Fig. 2: eine Seitenansicht einer ersten Ausführungsform des Mittels zur axialen Sicherung der Welle des erfindungsgemäßen Abgasturboladers und des mit ihr verbundenen Turbinenrades, mit einem im Gehäuse angeordneten Fangring,
- Fig. 3: eine Axialansicht des Mittels zur axialen Sicherung der Welle und des mit ihr verbundenen Turbinenrades nach Fig. 2,
- Fig. 4: eine isometrische Ansicht des Fangrings nach Fig. 2.
- Fig. 5: eine Seitenansicht einer zweiten Ausführungsform des Mittels zur axialen Sicherung der Welle des erfindungsgemäßen Abgasturboladers und des mit ihr verbundenen Turbinenrades, mit einem im Gehäuse angeordneten Fangring,
- Fig. 6: eine Axialansicht des Mittels zur axialen Sicherung der Welle und des mit ihr verbundenen Turbinenrades nach Fig. 5,
- Fig. 7: eine isometrische Ansicht des Fangrings nach Fig. 5, und
- Fig. 8: einen Längsschnitt durch das Mittel zur axialen Sicherung der Welle und des mit ihr verbundenen Turbinenrades nach Fig. 5.

### Weg zur Ausführung der Erfindung

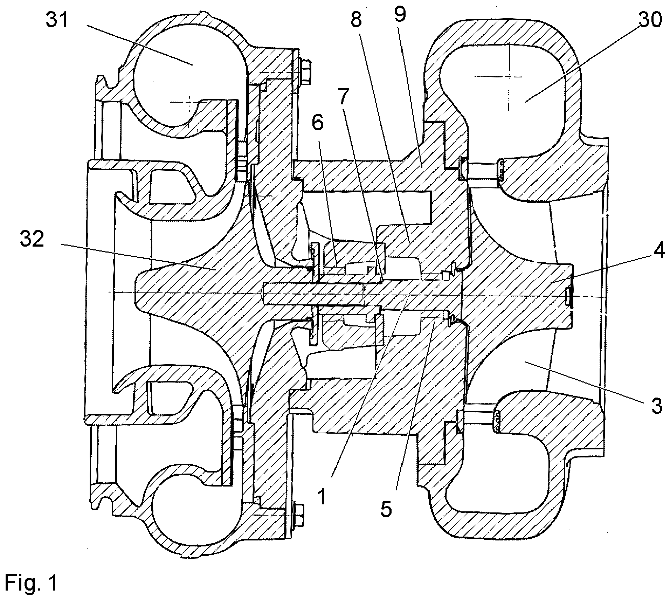

Fig. 1 zeigt einen Abgasturbolader gemäss dem Stand der Technik mit einem Radialverdichter und einer Radialturbine. Die Radialturbine umfasst ein Turbinenrad mit einem Nabenkörper 4 und darauf befestigten Laufschaufeln 3. Das Turbinenrad ist auf der Welle 1 befestigt oder einteilig mit dieser ausgeführt. Das Turbinengehäuse 30 umschliesst das Turbinenrad und begrenzt die Strömungskanäle, welche das heisse Abgas von der Brennkraftmaschine über das Turbinenrad zu den Auspuffanlagen führen. Der Radialverdichter umfasst ein Verdichterrad 32, welches ebenfalls auf der Welle 1 befestigt ist. Das Verdichtergehäuse 31 begrenzt die verdichterseitigen Strömungskanäle und setzt sich in der Regel aus mehreren Gehäuseteilen zusammen.

Für den Fall, dass die Welle 1 beim Schaufelbersten der Turbinenschaufeln 3 zwischen den Radial-Lagerstellen 5 und 6 im Bereich des Axiallagers 7 versagt, soll der turbinenseitige Teil des Wellenstummels und der damit verbundene Nabenkörper 4 durch eine entsprechende Vorrichtung axial gesichert und ein Austreten der Teile in den Gasaustritt unterbunden werden.

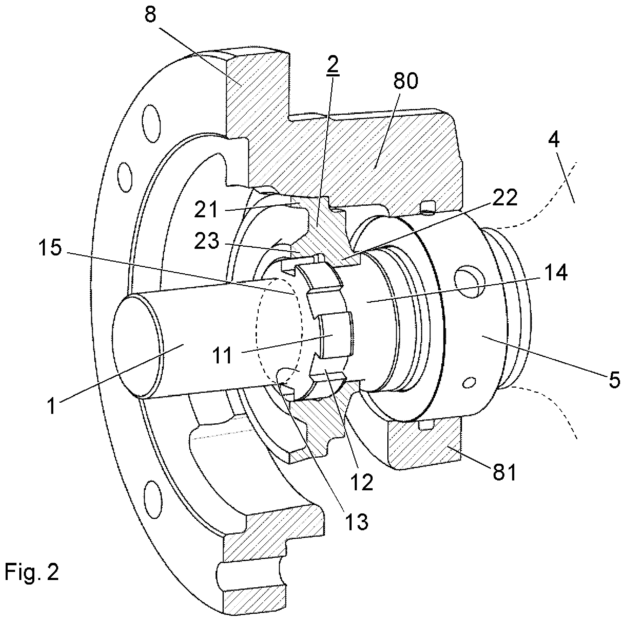

Eine erste Ausführungsform eines erfindungsgemässen Mittels zur axialen Sicherung der Welle und des mit ihr verbundenen Turbinenrades für ein turbinenseitiges Berstkonzept eines Abgasturboladers bei Schaufelbersten umfasst die in den Figuren 2-4 dargestellte und hiernach erläuterte Vorrichtung.

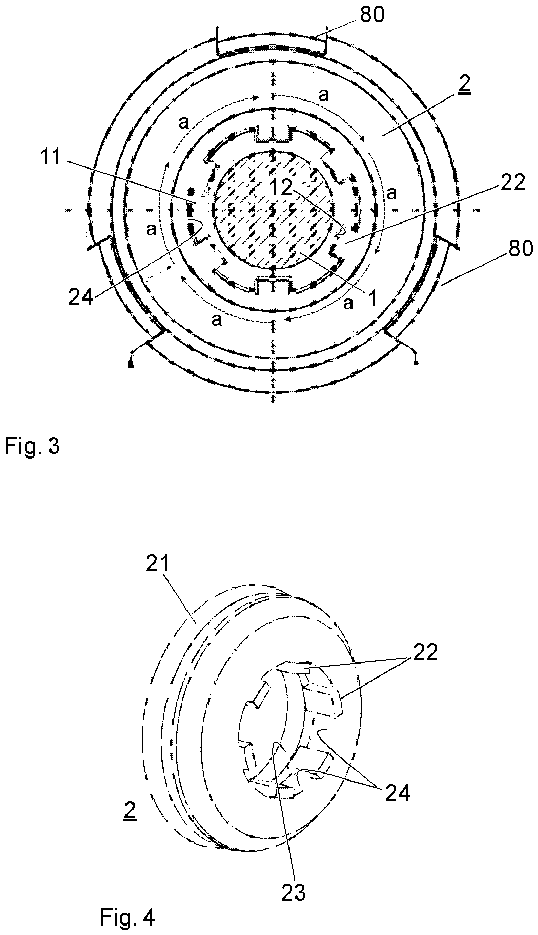

Bei dieser Vorrichtung ist ein Gehäuseelement als ein separates Gehäuseeinsatzstück in Form eines Fangrings 2 ausgebildet und setzt sich aus dem Fangring 2 sowie einem radial nach Aussen ragenden Vorsprung (Radialvorsprung) an der Welle zusammen. Der Radialvorsprung weist entlang dem Umfang eine Aussenkontur auf, umfasst also entlang dem Umfang Bereiche mit unterschiedlicher radialer Aussenabmessung, im konkreten Fall Nocken 11 und Nuten 12. Der Fangring 2, welcher als Gehäuseeinsatzstück form- oder kraftschlüssig mit einem Flansch 80 des Lagergehäuses 8 verbunden ist, weist, gemäss Fig. 3, eine zentrale Öffnung auf, durch welche die Welle 1 in axialer Richtung durchgeschoben werden kann. Im Bereich dieser Öffnung weist der Fangring 2 entlang dem Umfang eine Innenkontur auf, umfasst also entlang dem Umfang Bereiche mit unterschiedlicher radialer Innenabmessung, im konkreten Fall ebenfalls Nocken 22 und Nuten 24.

Die Innenkontur am Fangring 2 ist auf die Aussenkontur am Radialvorsprung der Welle 1 abgestimmt, so dass sich die Welle 1 mit dem Radialvorsprung in einer bestimmten Winkelstellung (Ausrichtung in Umfangsrichtung) zum Fangring 2 durch die Öffnung im Fangring schieben lässt, während in allen anderen Winkelstellungen die radial nach Innen stehenden Vorsprünge der Innenkontur am Fangring und die radial nach Aussen stehenden Vorsprünge der Aussenkontur an der Welle eine axiale Verschiebung von Welle und Fangring verhindern.

Weisen die beiden Konturen, wie im vorliegenden Fall, eine Symmetrie mit mehreren, sich wiederholenden Kontursegmenten a auf, ergeben sich mehrere bestimmte Winkelstellungen, bei welchen sich die beiden Teile in axialer Richtung relativ zu einander verschieben lassen. Wie aus Fig. 3 ersichtlich ist, passen die Nocken 22 des Fangrings 2 in dieser ersten Ausführungsform in genau sechs Winkelstellungen von Welle zu Fangring in die Nuten 12 im Radialvorsprung der Welle 1.

Bei der Montage wird die Welle 1 von der Turbinenseite (von rechts in Fig. 2) her zur Verdichterseite hin (nach links) durch den Fangring 2 geschoben, bis die Welle mit dem Radialvorsprung an der turbinenseitigen Stirnfläche des Fangrings ansteht. Nun gilt es, die bestimmte Winkelstellung der Welle zum Fangring einzustellen, damit sich die Welle 1 mit den Nocken 11 am Radialvorsprung durch die Nuten 24 im Fangring 2 schieben lässt. Sind die Nocken 11 in axialer Richtung vollständig durch die Nuten 24 im Fangring 2 durchgeschoben, gelangen sie in einen Bereich der Welle mit einer umlaufenden Nut, wobei die Nut als Hinterschnitt 14 bezüglich des radialen Vorsprungs mit den Nocken und Nuten ausgebildet ist, so dass die maximale radiale Ausdehnung im Bereich des Hinterschnitts kleiner ist als der minimale Innenradius des Fangrings im Bereich der Innenkontur in der zentralen Öffnung.

Auf der verdichterseitigen Stirnfläche weisen die Nocken 22 des Fangrings 2 vorteilhafterweise senkrecht zur Achse verlaufende Anschlagsflächen auf, welche im Falle eines Zusammentreffens mit den Nocken 11 der Welle 1 als grossflächigen Axialanschlag dienen.

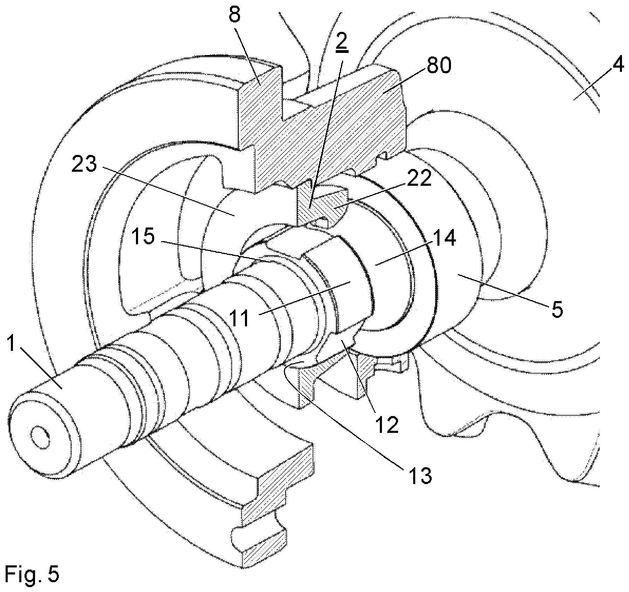

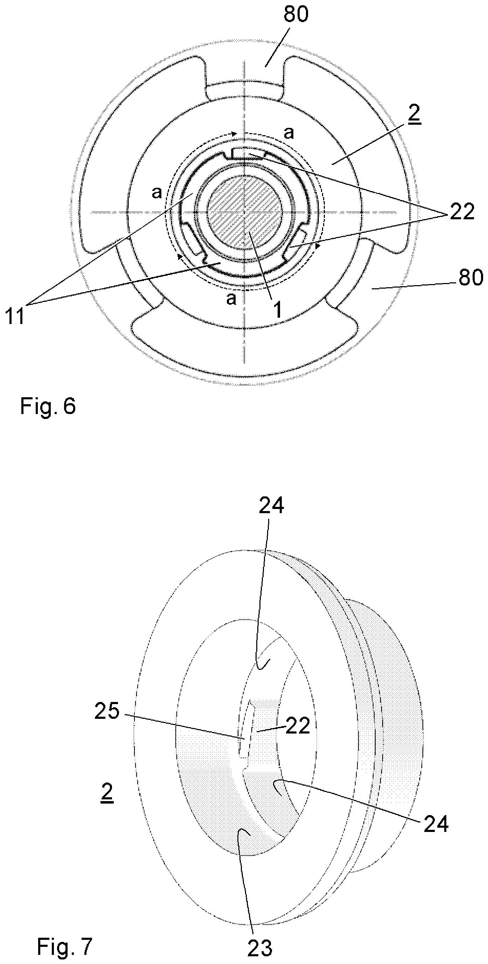

In einer zweiten Ausführungsform gemäß der Erfindung nach den Fig. 5 bis 8 umfasst die Vorrichtung wiederum den Fangring 2 mit einer konturierten zentralen Öffnung sowie einen konturierten Radialvorsprung.

Die Welle 1 verfügt im Bereich zwischen dem Radialvorsprung und dem Turbinenrad wiederum über einen Hinterschnitt 14, in welchen die Nocken 22 des Fangrings 2 eingreifen und die Welle 1 dadurch axial sichern. Der Fangring 2 weist in dieser Ausführungsform drei über den Umfang verteilte Nocken 22 sowie einen umlaufenden Stützring 23 auf. Der Stützring ist als ein massiver Ring ausgebildet, welcher den Fangring im Berstfall zusammenhält, am Gehäuse abstützt und stabilisiert.

Wiederum sind die Aussenkontur der Welle und die Innenkontur des Fangrings so aufeinander abgestimmt ausgeführt, dass sich beide Geometrien bei geeigneter Winkelstellung durch axiales Verschieben der Welle für die Montage respektive Demontage durchdringen lassen. Die Welle 1 kann in diesem Fall in genau drei bestimmten Winkelstellungen axial durch den Fangring 2 geschoben werden. Erfindungsgemäss lässt sich im Betriebszustand des Abgasturboladers die rotierende Welle 1 nicht ohne Materialabtrag aus dem Fangring 2 herausziehen, womit sich eine axiale Sicherung der Welle im Betrieb ergibt. Insbesondere bei hohen Drehzahlen ist ein Ausfädeln der Welle 1 aus dem Fangring 2 unwahrscheinlich. Die Nocken 22 des Fangrings 2 müssten die rotierenden Nuten 12 der Welle im richtigen Zeitpunkt und mit enorm hoher axialer Geschwindigkeit durchlaufen um ein Austreten ohne Materialabtrag zu ermöglichen. Dieses Verhalten wurde in den bisherigen Berstversuchen nicht beobachtet.

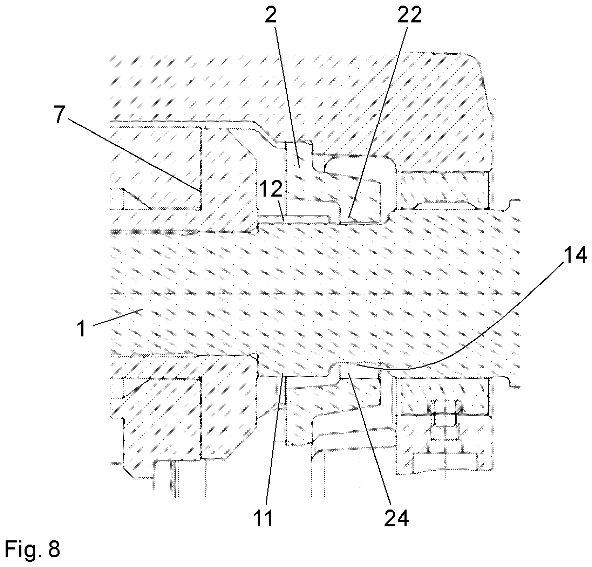

Hingegen ist bei Stillstand die Montage und Demontage der Welle gemäss obigem Beschrieb möglich, indem Welle und Fangring in eine bestimmte Winkelstellung zueinander gebracht werden. Fig. 8 zeigt in einem Schnittbild die erfindungsgemässe Vorrichtung in dieser Winkelstellung von Welle zu Fangring, in welcher die axiale Verschiebung zueinander möglich ist.

Optional weisen die Nocken 22 des Fangrings 2 im Bereich der verdichterseitigen Anschlagsflächen, also in dem Bereich, in welchem im Berstfall der Kontakt zwischen den beiden Teilen stattfindet, Fasen 25 von 10° bis 15° als Anlaufschrägen auf. Diese Fasen reduzieren den Aufprall beim Zusammentreffen der Nockenstirnseiten der Welle mit den Nockenstirnseiten des Fangrings. Unmittelbar nach dem Bersten der Turbine prallen die Nockenflanken der Welle 1 auf die Nockenflanken der Nocken 22 am Fangring, gleiten dann aber den Fasen 25 der Nocken am Fangring 2 entlang und reduzieren dadurch die Materialbelastungen in der Interaktionsphase zwischen Welle und Fangring.

Die Nocken und Nuten dürften nach einem Turbinenbersten deutliche Materialabträge aufweisen, weshalb die Nockengeometrien nicht zu klein ausgeführt werden sollte. Optimal dürfte etwa ein Nockenvolumen der Wellenpartie von der zwei- bis dreifachen Grösse der Fangringnocken sein. Das Nockenvolumen wird über den gesamten Umfang bemessen und ist abhängig von der axialen Länge der Nocken, der Radialen Höhe, sowie der Breite in Umfangsrichtung.

Der Fangring 2 ist in den beiden dargestellten Ausführungsformen in den turbinenseitigen Lagerflansch 80 des Lagergehäuses 8 eingepresst. Der Fangring wird mittels Axialanschlag in axialer Richtung genau positioniert und mittels Zentrierring 21 bezüglich der Welle zentriert. Optional kann der Fangring als Gehäusebestandteil auch einstückig mit dem Lagerflansch 80 oder dem gesamten Lagergehäuse 8 ausgebildet sein.

Als Material für die Welle sowie den Fangring eignen sich legierte Stähle mit hohen Bruchdehnungen (>10%) und hohen Festigkeiten, wobei die Teile nicht gehärtet sein sollen, um beim Bersten nicht durch Sprödbruch zu versagen.

Das radiale Spiel zwischen den radial hervorstehenden Nocken des Fangrings 22 und der Gegenkontur auf der Welle im Bereich des Hinterstichs 14 ist so auszulegen, dass keine zusätzliche Gleitlagerwirkung an der Welle erfolgt. Das axiale Spiel zwischen den Nocken des Fangrings und den Nocken am Radialvorsprung der Welle ist so auszulegen, dass es im normalen Betrieb des Abgasturboladers und bei den dabei auftretenden, allfälligen axialen Rotorbewegungen, zu keiner gegenseitigen Berührung kommt. Weiter ist das Eindringen von Schmieröl in die Fangvorrichtung zu Gunsten kleiner mechanischer Lagerverluste zu minieren.

Anstelle der ausführlich beschriebenen und in den Figuren dargestellten Lösung mit gegenüberliegenden Nocken und Nuten mit rechtwinkligem Profil können auch andere, aufeinander abgestimmte Innenkontur und Aussenkontur vorgesehen sein.

Ein Vorteil der erfindungsgemässen Vorrichtung liegt in der einfachen Montage- und Demontage der Welle bei Stillstand ohne zusätzliche Sicherungselemente, welche auch bei Rotorstillstand die Demontage respektive Montage der Welle erschweren. Mit diesem erfindungsgemässen Konzept ist eine axiale Wellensicherung nur im Berstfall und bei Rotation vorhanden. Im Normalbetrieb wirkt sich diese Vorrichtung auf das Drehverhalten des Rotors nicht aus.

### Bezugszeichenliste

- 1: Turboladerwelle
- 2: Fangring/ Gehäuseeinsatzstück (radial bis an die Welle reichendes Gehäuseelement)
- 3: Laufschaufeln des Turbinenrades
- 4: Nabenkörper des Turbinenrades
- 5: Turbinenseitiges Radiallager
- 6: Verdichterseitiges Radiallager
- 7: Axiallager
- 8: Flansch des Lagergehäuses
- 9: Lagergehäuse
- 11: Nocken der Welle (Teil der Aussenkontur am Radialvorsprung der Welle)
- 12: Nuten in der Welle (Teil der Aussenkontur am Radialvorsprung der Welle)
- 13: Anschlag für Axiallager
- 14: Umlaufende Nut, Hinterschnitt
- 15: Sollbruchstelle
- 21: Zentrierring am Fangring
- 22: Nocken des Fangrings/ Gehäuseeinsatzstücks (Teil der Innenkontur am Fangring/ Gehäuseeinsatzstück)
- 23: Stützring am Fangring/ Gehäuseeinsatzstück
- 24: Nuten im Fangring/ Gehäuseeinsatzstück (Teil der Innenkontur am Fangring/ Gehäuseeinsatzstück)
- 25: Fase (Anlaufschräge) auf der Kontaktseite der Nocken im Fangring/ Gehäuseeinsatzstück
- 30: Turbinengehäuse
- 31: Verdichtergehäuse
- 32: Verdichterrad
- 80, 81: Flansch des Lagergehäuses

## Patentansprüche

1. Abgasturbolader, umfassend eine Turbine mit einem in einem Turbinengehäuse (30) angeordneten Turbinenrad (4) und einen Verdichter mit einem in einem Verdichtergehäuse (31) angeordneten Verdichterrad (32), wobei das Turbinenrad und das Verdichterrad über eine Welle (1) miteinander verbunden sind, wobei die Welle mittels zwischen Turbinenrad und Verdichterrad in einem Lagergehäuse (8, 9) angeordneten Lagern (5, 6, 7) um eine Achse drehbar gelagert ist,
wobei zwischen dem Verdichterrad und dem Turbinenrad ein Mittel zur axialen Sicherung der Welle (1) und des mit ihr verbundenen Turbinenrades (4) vorgesehen ist, wobei dieses Mittel zur axialen Sicherung im Falle eines Berstens des Verdichterrades (32) und eines darauffolgenden Bruchs der Welle (1) zwischen dem Verdichterrad und diesem Mittel zur axialen Sicherung eine axiale Bewegung der Welle (1) und des mit ihr verbundenen Turbinenrades (4) in Richtung der Turbine verhindert,
**dadurch gekennzeichnet, dass**
das Mittel zur axialen Sicherung der Welle (1) und des mit ihr verbundenen Turbinenrades (4) einerseits ein radial bis an die Welle reichendes Gehäuseelement (2) mit einer zentralen Öffnung umfasst, welches im Bereich der zentralen Öffnung in Umfangsrichtung mit einer Innenkontur (22, 24) versehen ist, dass
das Mittel zur axialen Sicherung der Welle (1) und des mit ihr verbundenen Turbinenrades (4) andererseits einen Radialvorsprung auf der Welle (1) aufweist, welcher im eingebauten Zustand verdichterseitig der Innenkontur (22) angeordnet ist, und welcher in Umfangsrichtung mit einer Aussenkontur (11, 12) versehen ist, und dass die Innenkontur am Gehäuseelement und die Aussenkontur an der Welle derart aufeinander abgestimmt ausgestaltet sind, dass
sich beim Montieren der Welle (1) und des mit ihr verbundenen Turbinenrades (4), der radial nach aussen ragende Vorsprung auf der Welle in wenigstens einer, bestimmten Winkelstellung der Welle zum Gehäuse in axialer Richtung von der Turbinenseite her zur Verdichterseite hin durch die zentrale Öffnung des Gehäuseelements (2) schieben lässt, und dass im Betrieb oder im Berstfall die Aussenkontur (11) des radial nach aussen ragenden Vorsprungs in jeder anderen als der wenigstens einen, bestimmten Winkelstellung der Welle zum Gehäuse beim axialen Verschieben in Richtung der Turbine verdichterseitig an der Innenkontur (22) ansteht.

2. Abgasturbolader nach Anspruch 1, wobei die Innenkontur (22, 24) und die Aussenkontur (11, 12) je in eine Anzahl sich wiederholender Kontursegmente (a) unterteilt sind, so dass
sich der radial nach aussen ragende Vorsprung in einer der Anzahl sich wiederholender Segmente entsprechenden Anzahl Winkelstellungen der Welle zum Gehäuse in axialer Richtung durch das Gehäuseelement (2) schieben lässt, und der radial nach aussen ragende Vorsprung in jeder anderen Winkelstellung der Welle zum Gehäuse in axialer Richtung an dem Gehäuseelement (2) ansteht.

3. Abgasturbolader nach einem der Ansprüche 1 oder 2, wobei die Innenkontur (22, 24) und die Aussenkontur (11, 12) je mindestens eine Nocke (22, 11) und je mindestens eine Nut (24, 12) umfassen, wobei Nocke und Nut so definiert sind, dass in der Innenkontur eine Nocke (22) einen Abschnitt bezeichnet, welcher einen kleineren Innenradius aufweist als ein als Nut (24) bezeichneter Abschnitt, und in der Aussenkontur eine Nocke (11) einen Abschnitt bezeichnet, welcher einen grösseren Aussenradius aufweist als ein als Nut (12) bezeichneter Abschnitt.

4. Abgasturbolader nach Anspruch 3, wobei über den gesamten Umfang gesehen das Verhältnis des Volumens der Nocken (11) der Aussenkontur zum Volumen der Nocken (22) der Innenkontur wenigstens 2:1 beträgt, wobei das Volumen der Nocken sich über den gesamten Umfang bemisst und abhängig von der axialen Länge der Nocken, der Radialen Höhe, sowie der Breite in Umfangsrichtung ist.

5. Abgasturbolader nach Anspruch 4, wobei über den gesamten Umfang gesehen das Verhältnis des Volumens der Nocken (11) der Aussenkontur zum Volumen der Nocken (22) der Innenkontur wenigstens 3:1 beträgt.

6. Abgasturbolader nach einem der Ansprüche 1 bis 5, wobei das bis an die Welle reichende Gehäuseelement als ein Gehäuseeinsatzstück (2) ausgebildet ist, welches in axialer Richtung in das Lagergehäuse (8, 9) einbringbar ist.

7. Abgasturbolader nach Anspruch 6, wobei das Gehäuseeinsatzstück (2) ringförmig ausgebildet ist, und axial und radial am Lagergehäuse (8,9) aufliegt.

8. Abgasturbolader nach Anspruch 7, wobei das Gehäuseeinsatzstück als Fangring (2) ausgebildet ist und der Fangring auf wenigstens einer axialen Stirnseite als Axialanschlag dienende Flächen aufweist, welche zumindest teilweise mit einer Fase versehen sind.

## Claims

1. Exhaust gas turbocharger comprising a turbine with a turbine wheel (4) which is arranged in a turbine casing (30), and a compressor with a compressor wheel (32) which is arranged in a compressor casing (31), wherein the turbine wheel and the compressor wheel are connected to one another via a shaft (1), wherein the shaft is mounted so as to be rotatable about an axis by means of bearings (5, 6, 7) which are arranged between the turbine wheel and the compressor wheel in a bearing casing (8, 9),
wherein a means for axially securing the shaft (1) and the turbine wheel (4) connected to it is provided between the compressor wheel and the turbine wheel, wherein in the case of bursting of the compressor wheel (32) and of a subsequent fracture of the shaft (1) between the compressor wheel and the axially securing means, said axially securing means provides an axial movement of the shaft (1) and of the turbine wheel (4) connected to it, in the direction of the turbine,
**characterized in that**
the means for axially securing the shaft (1) and the turbine wheel (4) which is connected to it comprises, on the one hand, a housing element (2) which extends radially as far as the shaft, has a central opening and is provided with an inner contour (22, 24) in the circumferential direction in the region of the central opening, **in that** the means for axially securing the shaft (1) and the turbine wheel (4) connected to it has, on the other hand, a radial projection on the shaft (1), which radial projection is arranged, in the installed state, on the compressor side of the inner contour (22) and is provided in the circumferential direction with an outer contour (11, 12), and **in that** the inner contour on the housing element and the outer contour on the shaft are configured matched to one another in such a way that when the shaft (1) and the turbine wheel (4) which is connected to it are mounted, the radially outwardly protruding projection can be pushed on the shaft in the axial direction from the turbine side to the compressor side through the central opening of the housing element (2) in at least one specific angular position of the shaft with respect to the housing, and **in that** during operation or in the case of bursting the outer contour (11) of the radially outwardly protruding projection bears against the inner contour (22) on the compressor side during the axial pushing in the direction of the turbine in any other angular position of the shaft with respect to the housing than the at least one specific angular position.

2. Exhaust gas turbocharger according to Claim 1, wherein the inner contour (22, 24) and the outer contour (11, 12) are each divided into a number of repeating contour segments (a) such that the radially outwardly protruding projection can be pushed in the axial direction through the housing element (2) in a number of angular positions of the shaft with respect to the housing which corresponds to the number of repeating segments, and the radially outwardly protruding projection bears against the housing element (2) in the axial direction in any other angular position of the shaft with respect to the housing.

3. Exhaust gas turbocharger according to one of Claims 1 and 2, wherein the inner contour (22, 24) and the outer contour (11, 12) each comprise at least one cam (22, 11) and each comprise at least one groove (24, 12), wherein the cam and the groove are defined in such a way that in the inner contour a cam (22) defines a section which has a smaller inner radius than a section which is denoted as a groove (24), and in the outer contour a cam (11) denotes a section which has a larger outer radius than a section which is denoted as a groove (12).

4. Exhaust gas turbocharger according to Claim 3, wherein, when viewed over the entire circumference, the ratio of the volume of the cams (11) of the outer contour with respect to the volume of the cams (22) of the inner contour is at least 2:1, wherein the volume of the cams is measured over the entire circumference and is dependent on the axial length of the cams, the radial height and the width in the circumferential direction.

5. Exhaust gas turbocharger according to Claim 4, wherein, when viewed over the entire circumference, the ratio of the volume of the cams (11) of the outer contour with respect to the volume of the cams (22) of the inner contour is at least 3:1.

6. Exhaust gas turbocharger according to one of Claims 1 to 5, wherein the housing element which extends as far as the shaft is embodied as a housing insertion piece (2) which can be introduced into the bearing housing (8, 9) in the axial direction.

7. Exhaust gas turbocharger according to Claim 6, wherein the housing insertion piece (2) is embodied in an annular shape and rests axially and radially on the bearing housing (8, 9).

8. Exhaust gas turbocharger according to Claim 7, wherein the housing insertion piece is embodied as a catching ring (2), and the catching ring has, on at least one axial end side, surfaces which serve as an axial stop and are provided at least partially with a chamfer.

## Revendications

1. Turbocompresseur à gaz d'échappement, comportant une turbine dotée d'une roue de turbine (4) disposée dans un carter de turbine (30) et un compresseur doté d'une roue de compresseur (32) disposée dans un carter de compresseur (31), la roue de turbine et la roue de compresseur étant reliées l'une à l'autre par le biais d'un arbre (1), l'arbre étant monté de manière à pouvoir tourner autour d'un axe au moyen de paliers (5, 6, 7) disposés dans un carter de palier (8, 9) entre la roue de turbine et la roue de compresseur,
un moyen permettant la fixation axiale de l'arbre (1) et de la roue de turbine (4) reliée à celui-ci étant prévu entre la roue de compresseur et la roue de turbine, ce moyen permettant la fixation axiale empêchant un déplacement axial de l'arbre (1) et de la roue de turbine (4) reliée à celui-ci en direction de la turbine en cas d'éclatement de la roue de compresseur (32) et de rupture subséquente de l'arbre (1) entre la roue de compresseur et ce moyen permettant la fixation axiale,
**caractérisé en ce que**
le moyen permettant la fixation axiale de l'arbre (1) et de la roue de turbine (4) reliée à celui-ci comporte d'une part un élément de carter (2) s'étendant radialement jusqu'à l'arbre et doté d'une ouverture centrale, lequel élément de carter est doté d'un contour intérieur (22, 24) dans la direction périphérique dans la région de l'ouverture centrale, **en ce que**
le moyen permettant la fixation axiale de l'arbre (1) et de la roue de turbine (4) reliée à celui-ci comporte d'autre part une saillie radiale sur l'arbre (1), laquelle est, à l'état monté, disposée sur le côté compresseur du contour intérieur (22), et laquelle est dotée d'un contour extérieur (11, 12) dans la direction périphérique, et **en ce que**
le contour intérieur sur l'élément de carter et le contour extérieur sur l'arbre sont conçus de manière adaptée l'un à l'autre de telle sorte que, lors du montage de l'arbre (1) et de la roue de turbine (4) reliée à celui-ci, la saillie faisant saillie radialement vers l'extérieur peut être poussée sur l'arbre dans la direction axiale à partir du côté turbine en direction du côté compresseur à travers l'ouverture centrale de l'élément de carter (2) dans au moins une position angulaire déterminée de l'arbre par rapport au carter, et **en ce que**,
lors du fonctionnement ou en cas d'éclatement, le contour extérieur (11) de la saillie faisant saillie radialement vers l'extérieur, dans toute position angulaire, différente de ladite au moins une position angulaire déterminée, de l'arbre par rapport au carter, s'appuie contre le contour intérieur (22) côté compresseur en cas de déplacement axial en direction de la turbine.

2. Turbocompresseur à gaz d'échappement selon la revendication 1, dans lequel le contour intérieur (22, 24) et le contour extérieur (11, 12) sont divisés respectivement en un certain nombre de segments de contour (a) répétitifs, de telle sorte que
la saillie faisant saillie radialement vers l'extérieur puisse être poussée à travers l'élément de carter (2) dans la direction axiale dans un certain nombre de positions angulaires, correspondant au nombre de segments répétitifs, de l'arbre par rapport au carter et que, dans toute autre position angulaire de l'arbre par rapport au carter, la saillie faisant saillie radialement vers l'extérieur s'appuie contre l'élément de carter (2) dans la direction axiale.

3. Turbocompresseur à gaz d'échappement selon la revendication 1 ou 2, dans lequel le contour intérieur (22, 24) et le contour extérieur (11, 12) comportent respectivement au moins un ergot (22, 11) et respectivement au moins une rainure (24, 12), l'ergot et la rainure étant définis de telle sorte que, dans le contour intérieur, un ergot (22) désigne une partie qui présente un diamètre intérieur plus petit qu'une partie désignée comme rainure (24), et que, dans le contour extérieur, un ergot (11) désigne une partie qui présente un diamètre extérieur plus grand qu'une partie désignée comme rainure (12).

4. Turbocompresseur à gaz d'échappement selon la revendication 3, dans lequel, vu sur toute la périphérie, le rapport du volume des ergots (11) du contour extérieur par rapport au volume des ergots (22) du contour intérieur est d'au moins 2:1, le volume des ergots étant calculé sur toute la périphérie et étant dépendant de la longueur axiale des ergots, de la hauteur radiale ainsi que de la largeur dans la direction périphérique.

5. Turbocompresseur à gaz d'échappement selon la revendication 4, dans lequel, vu sur toute la périphérie, le rapport du volume des ergots (11) du contour extérieur par rapport au volume des ergots (22) du contour intérieur est d'au moins 3:1.

6. Turbocompresseur à gaz d'échappement selon l'une quelconque des revendications 1 à 5, dans lequel l'élément de carter s'étendant jusqu'à l'arbre est réalisé en tant qu'insert de carter (2), lequel peut être introduit dans le carter de palier (8, 9) dans la direction axiale.

7. Turbocompresseur à gaz d'échappement selon la revendication 6, dans lequel l'insert de carter (2) est de forme annulaire et repose axialement et radialement sur le carter de palier (8,9).

8. Turbocompresseur à gaz d'échappement selon la revendication 7, dans lequel l'insert de carter est réalisé sous forme de bague de retenue (2) et la bague de retenue comprend, sur au moins un côté frontal axial, des surfaces servant de butée axiale, lesquelles sont pourvues au moins partiellement d'un biseau.
